(19) Europäisches Patentamt
European Patent Office
Office européen des brevets

(11) **EP 3 190 299 A1**

(12) **EUROPÄISCHE PATENTANMELDUNG**

(43) Veröffentlichungstag:
**12.07.2017 Patentblatt 2017/28**

(51) Int Cl.:
***F16B 7/18*** *(2006.01)*     ***F16B 37/04*** *(2006.01)*

(21) Anmeldenummer: **16150736.3**

(22) Anmeldetag: **11.01.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **HILTI Aktiengesellschaft**
**9494 Schaan (LI)**

(72) Erfinder: **Merhar, Thomas**
**9494 Schaan (LI)**

(74) Vertreter: **Hilti Aktiengesellschaft**
**Corporate Intellectual Property**
**Feldkircherstrasse 100**
**Postfach 333**
**9494 Schaan (LI)**

(54) **MONTAGEANORDNUNG MIT MONTAGESCHIENE UND ÜBERSTEHENDER HALTEMUTTER**

(57)     Die Erfindung betrifft eine Montageanordnung mit einer Montageschiene, welche eine erste Längsseite, eine der ersten Längsseite gegenüberliegende zweite Längsseite, eine die erste Längsseite und die zweite Längsseite verbindende dritte Längsseite und eine die erste Längsseite und die zweite Längsseite verbindende sowie der dritten Längsseite gegenüberliegende vierte Längsseite aufweist, wobei die Montageschiene in ihrer ersten Längsseite eine erste Durchgangsöffnung aufweist, einer Befestigungseinrichtung, welche die erste Durchgangsöffnung der Montageschiene durchläuft, und welche ein Aussengewinde aufweist, und einer Haltemutter, welche ein zum Aussengewinde der Befestigungseinrichtung korrespondierendes Innengewinde aufweist, welche auf die Befestigungseinrichtung aufgeschraubt ist, und welche die Montageschiene an der ersten Längsseite formschlüssig an der Befestigungseinrichtung sichert. Erfindungsgemäss ist vorgesehen, dass die Haltemutter breiter ist als die erste Längsseite der Montageschiene, und dass die Haltemutter auf entgegengesetzten Seiten über die erste Längsseite der Montageschiene übersteht.

EP 3 190 299 A1

**Beschreibung**

Die Erfindung betrifft eine Montageanordnung gemäss dem Oberbegriff des Anspruchs 1. Eine solche Montageanordnung ist ausgestattet mit einer Montageschiene, welche eine erste Längsseite, eine der ersten Längsseite gegenüberliegende zweite Längsseite, eine die erste Längsseite und die zweite Längsseite verbindende dritte Längsseite und eine die erste Längsseite und die zweite Längsseite verbindende sowie der dritten Längsseite gegenüberliegende vierte Längsseite aufweist, wobei die Montageschiene in ihrer ersten Längsseite eine erste Durchgangsöffnung aufweist, einer Befestigungseinrichtung, welche die erste Durchgangsöffnung der Montageschiene durchläuft, und welche ein Aussengewinde aufweist, und einer Haltemutter, welche ein zum Aussengewinde der Befestigungseinrichtung korrespondierendes Innengewinde aufweist, welche auf die Befestigungseinrichtung aufgeschraubt ist, und welche die Montageschiene an der ersten Längsseite formschlüssig an der Befestigungseinrichtung sichert.

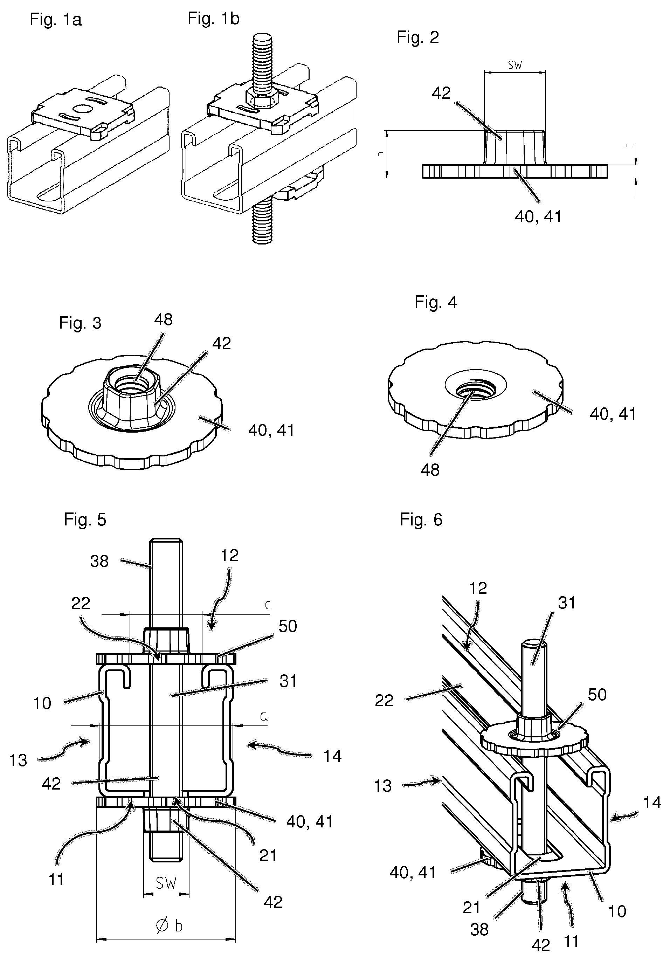

Zum Abhängen von Leitungen an Gebäudedecken sind trapezartige Anordnungen bekannt, welche aus einer Montageschiene und zwei Gewindestangen bestehen. Die beiden Gewindestangen hängen dabei beabstandet voneinander von der Decke und halten die Montageschiene, wobei an der Montageschiene wiederum eine oder mehrere Schellen für die Leitungen angeordnet sind. Beispiele solcher Anordnungen gehen aus der US 2880949 A und der US 3960350 A hervor. Zum Befestigen der Montageschiene an den Gewindestangen werden die Gewindestangen durch Durchgangsöffnungen in der Montageschiene durchgeführt und Muttern auf die Gewindestangen aufgeschraubt, welche die Montageschiene axial an den Gewindestangen sichern. Zwischen den Muttern und der benachbarten Montageschiene können dabei Unterlegscheiben oder Lochplatten vorgesehen werden, durch welche die jeweilige Gewindestange durchgeführt ist. Die Lochplatte kann dabei auch etwa rechteckig sein und, insbesondere zum Umgreifen der Montageschiene, über die Montageschiene überstehen. Ein Beispiel einer solchen Lochplatte, welche unter dem Namen "Hilti MQZ-L" angeboten wird, sowie ihre bestimmungsgemässe Konfiguration, in der sie zwischen einer Mutter mit Innengewinde und einer Montageschiene angeordnet ist, sind in den Figuren 1a beziehungsweise 1 b gezeigt.

Aufgabe der Erfindung ist es, eine Montageanordnung anzugeben, die bei geringem Aufwand, hoher Zuverlässigkeit und hoher Vielseitigkeit besonders einfach und sicher justiert werden kann.

Die Aufgabe wird erfindungsgemäss durch eine Montageanordnung mit den Merkmalen des Anspruchs 1 gelöst. Bevorzugte Ausführungsformen sind in den abhängigen Ansprüchen angegeben.

Eine erfindungsgemässe Montageanordnung ist dadurch gekennzeichnet, dass die Haltemutter, insbesondere deren Grundplatte, breiter ist als die erste Längsseite der Montageschiene, und dass die Haltemutter, insbesondere deren Grundplatte, auf entgegengesetzten Seiten, insbesondere der Montageschiene, über die erste Längsseite der Montageschiene übersteht.

Ein Grundgedanke der Erfindung kann darin gesehen werden, die Haltemutter, insbesondere deren Basisplatte, mit einem beidseitigen Überstand gegenüber den an die Haltemutter angrenzenden Bereich der Montageschiene auszugestalten. Hierdurch wird eine besonders einfache, präzise und zuverlässige Betätigung der Haltemutter und somit eine besonders einfache, präzise und zuverlässige Justierung, vorzugsweise Höhenjustierung, der Montageanordnung möglich, dies insbesondere auch werkzeuglos und unter anderem deshalb, weil die Montageschiene einen Anschlag für den die Haltemutter installierenden Monteur bieten kann. Darüber hinaus ist die Haltemutter erfindungsgemäss auch über die Schiene hinweg besonders gut zugänglich, so dass ein besonders grosses Einsatzspektrum für die erfindungsgemässe Montageanordnung gegeben ist.

Der beidseitige Überstand über die erste Längsseite kann insbesondere in Draufsicht auf die Haltemutter, das heisst bei Blickrichtung durch die erste Durchgangsöffnung und/oder bei Blickrichtung entlang der Längsachse der Befestigungseinrichtung, insbesondere entlang der Längsachse des Aussengewindes der Befestigungseinrichtung, gegeben sein, und/oder im Schienenquerschnitt, das heisst bei Blickrichtung parallel zur Längsachse der Montageschiene. Der erfindungsgemässe Überstand über die erste Längsseite kann insbesondere beinhalten, dass die Haltemutter in Draufsicht auf die Haltemutter und/oder im Schienenquerschnitt die dritte und die vierte Längsseite jeweils zur Aussenseite der Montageschiene hin überragt. Die Haltemutter kann ein einseitiges Axiallager für die Montageschiene an der Befestigungseinrichtung bilden. Die Haltemutter ist zweckmässigerweise zumindest bereichsweise ausserhalb der Montageschiene angeordnet, insbesondere der ersten Längsseite der Montageschiene zumindest bereichsweise schienenaussenseitig vorgelagert. In einer typischen Anwendung in einer trapezartigen Anordnung zur Leitungsabhängung wird die Längsachse der Montageschiene häufig horizontal und die Längsachse der Befestigungseinrichtung häufig vertikal verlaufen.

Die Montageschiene, die Befestigungseinrichtung und/oder die Haltemutter bestehen vorzugsweise jeweils aus einem Metallmaterial, welches auch beschichtet sein kann. Beispielsweise kann die Haltemutter ein Stanzbiegeteil sein. Die Montageschiene kann insbesondere eine C-Profilschiene sein. Zweckmässigerweise hat die Montageschiene eine näherungsweise rechteckige Querschnittsform. Die Haltemutter ist auf die Befestigungseinrichtung aufgeschraubt, das heisst das Innengewinde der Haltemutter greift formschlüssig in das Aussengewinde der Befestigungseinrichtung ein. Die erste Durchgangsöffnung kann beispielsweise ein durchgehender Schlitz in der Montageschiene oder ein Langloch sein.

EP 3 190 299 A1

Besonders bevorzugt ist es, dass die Haltemutter, insbesondere deren Basisplatte, breiter ist als die Montageschiene, das heisst dass die Haltemutter eine grössere Breite aufweist als die Montageschiene. Unter der Breite kann dabei insbesondere die maximale Abmessung in einer Richtung, vorzugsweise in einer Richtung senkrecht zur Längsachse der Befestigungseinrichtung und senkrecht zur Längsachse der Montageschiene verstanden werden. Insbesondere kann vorgesehen sein, dass

$$a = 1,0 * b \text{ bis } 1,4 * b$$

und vorzugsweise

$$a = 1,1 * b$$

ist, wobei a die Breite und/oder der Durchmesser der Haltemutter und b die Breite der Montageschiene ist.

Eine besonders bevorzugte Weiterbildung der Erfindung besteht darin, dass die Haltemutter zumindest einen Mehrkantkragen aufweist, der einen Aussenmehrkant, insbesondere einen Aussensechskant, aufweist. Am Aussenmehrkant des Mehrkantkragens kann ein Schraubenschlüssel angesetzt werden, beispielsweise falls ein besonders hohes Drehmoment in der Haltemutter erforderlich ist. Die Ausführung des Aussenmehrkants an einem Kragen kann dabei im Hinblick auf den Fertigungsaufwand besonders vorteilhaft sein.

Der Aussensechskant kann vorzugsweise wie folgt zum Innengewinde der Haltemutter abgestimmt sein:

| Bezeichnung Innengewinde | Schlüsselweite (SW) des Aussensechskants |
|---|---|
| M8 | 11 mm |
| M10 | 13 mm |
| M12 | 17 mm oder 16 mm |

Zusätzlich zum Mehrkantkragen kann die Haltemutter auch zumindest einen Rundkragen aufweisen, der zur Zentrierung der Haltemutter an der Montageschiene dienen kann. Der Rundkragen kann auf derselben Seite der Haltemutter angeordnet sein wie der Mehrkantkragen, das heisst er kann insbesondere zwischen dem Mehrkantkragen und einer Basisplatte der Haltemutter angeordnet sein. Der Rundkragen kann aber auch auf der dem Mehrkantkragen abgewandten Seite der Haltemutter angeordnet sein.

Besonders bevorzugt ist es, dass der Mehrkantkragen in die erste Durchgangsöffnung der Montageschiene hineinragt, und dass die Haltemutter am Mehrkantkragen in der ersten Durchgangsöffnung mit der Montageschiene drehgekoppelt, insbesondere formschlüssig drehgekoppelt, ist. Gemäss dieser Ausgestaltung ist die Schlüsselweite des Mehrkantkragens kleiner als die erste Durchgangsöffnung, allerdings nur geringfügig kleiner, so dass zwischen dem Mehrkantkragen der Mutter einerseits und der Montageschiene andererseits ein Drehformschluss, gegebenenfalls mit etwas Spiel, besteht. Gemäss dieser Ausführungsform kann ein unerwünschtes Verdrehen der Haltemutter, selbst bei starken Vibrationen, einfach und zuverlässig verhindert werden, so dass eine zuverlässige Verbindung auch dann gegeben sein kann, wenn einfache Schraubverbindungen versagen würden.

Der Mehrkantkragen ist insbesondere drehfest an der Basisplatte der Haltemutter angeordnet. Besonders bevorzugt ist es, dass der Mehrkantkragen integral an der Haltemutter ausgebildet ist. Vorzugsweise ist der Mehrkantkragen also einstückig mit der Basisplatte der Haltemutter ausgeführt. Dies kann im Hinblick auf den Fertigungsaufwand und die Robustheit der Haltemutter vorteilhaft sein.

Beispielsweise kann die Befestigungseinrichtung eine Gewindestange sein, welche die Montageschiene vorzugsweise durchläuft.

Insbesondere kann vorgesehen sein, dass die Montageschiene in ihrer zweiten Längsseite eine zweite Durchgangsöffnung aufweist, dass die Befestigungseinrichtung die zweite Durchgangsöffnung der Montageschiene durchläuft, und dass die Montageanordnung eine zweite Haltemutter aufweist, welche ein zum Aussengewinde der Befestigungseinrichtung korrespondierendes Innengewinde aufweist, welche auf die Befestigungseinrichtung aufgeschraubt ist, und welche die Montageschiene an der zweiten Längsseite formschlüssig an der Befestigungseinrichtung sichert. Gemäss dieser Ausführungsform wird die Montageschiene auf gegenüberliegenden Seiten von jeweils einer Haltemutter gesichert, so dass ein zweiseitiges Axiallager gegeben ist. Vorzugsweise ist die erste Durchgangsöffnung ein Langloch und die zweite Durchgangsöffnung ein Schlitz, der sich entlang der gesamten Montageschiene erstreckt.

Sofern zwei Haltemuttern vorgesehen sind, ist es besonders zweckmässig, dass die erste Haltemutter und die zweite Haltemutter im Wesentlichen identische Abmessungen aufweisen. Es kommt also zweimal die im Wesentlichen identische Haltemutter zum Einsatz, was den Aufwand und die Lagerkosten weiter reduzieren kann. Die im Wesentlichen identischen Abmessungen können insbesondere beinhalten, dass die jeweiligen Innengewinde jeweils fertigungsbedingt unter unterschiedlichen Winkelanordnungen in der Haltemutter angeordnet sind.

Es kann auch vorgesehen werden, dass die Befestigungseinrichtung eine Hammerkopfschraube ist, welche in der Montageschiene endet. Eine solche Hammerkopfschraube kann in einer Raumrichtung quer zur Längsachse des Aussengewindes der Befestigungseinrichtung eine Querschnittsvergrösserung aufweisen, mit welcher die Hammerkopfschraube die Montageschiene in der Umgebung der ersten Durchgangsöffnung hintergreifen kann und hierdurch die Hammerkopfschraube an der Montageschiene axial festlegen kann.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:

Figur 1a: eine perspektivische Darstellung einer Montageschiene mit einer Lochplatte "Hilti MQZ-L" gemäss dem Stand der Technik;

Figur 1b: eine perspektivische Darstellung der Montageschiene mit der Lochplatte aus Figur 1a, wobei die Lochplatte bestimmungsgemäss zwischen einer an einer Gewindestange aufgeschraubten Mutter und der Montageschiene angeordnet ist, gemäss dem Stand der Technik;

Figur 2: eine Haltemutter zur Verwendung in einer erfindungsgemässen Montageanordnung von der Seite;

Figur 3: eine perspektivische Ansicht der Haltemutter aus Figur 2;

Figur 4: eine andere perspektivische Ansicht der Haltemutter aus Figuren 2 und 3;

Figur 5: eine Ansicht eines ersten Ausführungsbeispiels einer erfindungsgemässen Montageanordnung im Schienenquerschnitt von vorne;

Figur 6: eine perspektivische Ansicht der Montageanordnung aus Figur 5;

Figur 7: eine Ansicht eines zweiten Ausführungsbeispiels einer erfindungsgemässen Montageanordnung im Schienenquerschnitt von vorne;

Figur 8: eine perspektivische Ansicht der Montageanordnung aus Figur 7;

Figur 9: eine perspektivische Ansicht eines dritten Ausführungsbeispiels einer erfindungsgemässen Montageanordnung;

Figur 10 eine Ansicht eines vierten Ausführungsbeispiels einer erfindungsgemässen Montageanordnung im Schienenquerschnitt von vorne;

Figur 11: eine Ansicht eines fünften Ausführungsbeispiels einer erfindungsgemässen Montageanordnung im Schienenquerschnitt von vorne;

Figur 12: eine perspektivische Ansicht der Montageanordnung aus Figur 11;

Figur 13: eine Ansicht eines sechsten Ausführungsbeispiels einer erfindungsgemässen Montageanordnung im Schienenquerschnitt von vorne;

Figur 14: eine perspektivische Ansicht der Montageanordnung aus Figur 13; und

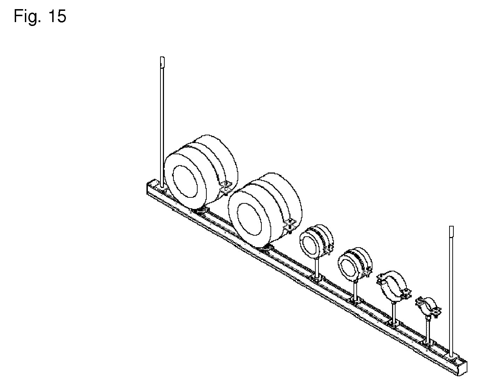

Figur 15: eine trapezartige Leitungsanordnung, bei welcher die Montageanordnungen der Figuren 5 bis 14 zum Einsatz kommen können.

Gleich wirkende Elemente sind in den Figuren mit denselben Bezugszeichen gekennzeichnet.

Die Figuren 1a und 1b zeigen eine Montageanordnung nach dem Stand der Technik, gemäss Figur 1a vor der Montage und gemäss Figur 1b nach der Montage. Die Montageanordnung weist eine Montageschiene und eine Lochplatte auf. Bei der entsprechend Figur 1b montierten Montageanordnung ist eine Gewindestange durch das Loch in der Lochstange und durch die Montageschiene geführt. An der Gewindestange ist eine Mutter angeordnet, welche die Lochplatte und somit die Montageschiene formschlüssig an der Gewindestange axial fixiert.

Die Figuren 2 bis 4 zeigen eine Haltemutter 40 zur Verwendung in einer erfindungsgemässen Montageanordnung. Die Haltemutter 40 weist eine annähernd kreisrunde Basisplatte 41 auf, welche umfangsseitig eine Profilierung für ein besseres Greifen aufweist. Die Haltemutter 40 weist ferner einen als Mehrkantkragen 42 ausgebildeten Kragen auf, welcher mittig an der Basisplatte 41 von der Basisplatte 41 vorsteht, und welcher vorzugsweise integral mit der Basisplatte 41 ausgeführt ist. Durch die Basisplatte 41 und den Mehrkantkragen 42 der Haltemutter 40 verläuft eine mit einem Innengewinde 48 versehene Durchgangsöffnung zur Aufnahme einer weiter unten im Detail erläuterten Befestigungseinrichtung, beispielsweise einer Gewindestange.

Die Figuren 5 und 6 zeigen ein erstes Ausführungsbeispiel einer erfindungsgemässen Montageanordnung. Die Montageanordnung weist eine Montageschiene 10 auf, die, wie insbesondere in Figur 5 erkennbar ist, einen annähernd rechteckigen, insbesondere quadratischen, Aussenquerschnitt aufweist. Die Montageschiene 10 weist in den Figuren 5 und 6 unten eine erste Längsseite 11, in den Figuren 5 und 6 oben eine zweite Längsseite 12, in den Figuren 5 und 6 links eine dritte Längsseite 13 und in den Figuren 5 und 6 rechts eine vierte Längsseite 14 auf. Die beiden Längsseiten 11 und 12 zum einen und die beiden Längsseiten 13 und 14 zum anderen liegen sich jeweils gegenüber, und die beiden Längsseiten 13 und 14 verbinden die beiden Längsseiten 11 und 12. In der ersten Längsseite 11 weist die Montageschiene 10 eine hier als Langloch ausgebildete Durchgangsöffnung 21 auf, wobei die Montageschiene 10 in der ersten Längsseite 11 auch noch weitere, separate, beispielsweise als Langloch ausgebildete Durchgangsöffnungen aufweisen kann. In der zweiten Längsseite 12 weist die Montageschiene 10 eine zweite Durchgangsöffnung 22. Diese zweite Durchgangsöffnung 22 ist hier als Schlitz ausgebildet, welcher sich vorzugsweise längs der gesamten Montageschiene 10 erstreckt.

Die Montageanordnung der Figuren 5 und 6 weist überdies eine als Gewindestange ausgeführte Befestigungseinrichtung 31 mit einem Aussengewinde 38 auf, welche durch die zweite Durchgangsöffnung 22 hindurch in die Montageschiene 10 eintritt und durch die erste Durchgangsöffnung 21 hindurch wieder aus der Montageschiene 10 austritt.

Die Montageanordnung weist überdies zwei Haltemuttern 40 und 50 auf, welche auf die als Gewindestange ausgeführte Befestigungseinrichtung 31 aufgeschraubt sind, wobei die erste Haltemutter 40 auf der ersten Längsseite 11 der Montageschiene 10 an der Montageschiene 10 anliegt und die zweite Haltemutter 50 auf der zweiten Längsseite 12 der Montageschiene 10 an der Montageschiene 10 anliegt. Die erste Haltemutter 40 ist querschnittsgrösser als die erste Durchgangsöffnung 21 und die zweite Haltemutter 50 ist querschnittsgrösser als die zweite Durchgangsöffnung 22. Somit bilden die Haltemuttern 40 und 50 jeweils ein einseitiges Axiallager für die Montageschiene 10. Da die Montageschiene 10 zwischen den beiden Haltemuttern 40 und 50 positioniert ist, fixieren die beiden Haltemuttern 40 und 50 die Montageschiene 10 zweiseitig axial an der als Gewindestange ausgeführten Befestigungseinrichtung 31.

Die Haltemuttern 40 und 50 der Montageanordnung der Figuren 5 und 6 sind wie in den Figuren 2 bis 4 dargestellt ausgeführt, wobei der Übersichtlichkeit halber die Details der Haltemuttern in den Figuren 5 und 6 nur bei der ersten Haltemutter 40 mit Bezugszeichen gekennzeichnet sind. Die zweite Haltemutter 50 ist jedoch analog zur ersten Haltemutter 40 ausgeführt. Die Basisplatten 41 der Haltemuttern 40 und 50 sind jeweils so durchmessergross ausgeführt, dass sie die Montageschiene 10 in der Breite überragen, das heisst b > a. Damit sind die Basisplatten 41 der Haltemuttern 40 und 50 besonders gut zugänglich.

Im Fall der Montageanordnung der Figuren 5 und 6 sind die Haltemuttern 40 und 50 so angeordnet, dass die jeweiligen Mehrkantkragen 42 von der Montageschiene 10 hinwegweisen, das heisst die beiden Mehrkantkragen 42 stehen an der Montageanordnung nach aussen vor. Die beiden Mehrkantkragen 42 der beiden Haltemuttern 40 und 50 sind somit für einen Schraubenschlüssel zugänglich, so dass die beiden Haltemuttern 40 und 50 entweder manuell, beispielsweise durch Ansetzen der Hand an der jeweiligen Basisplatte 41, oder mittels eines Schraubenschlüssels, der am jeweiligen Mehrkantkragen 42 angesetzt wird, festgezogen werden können.

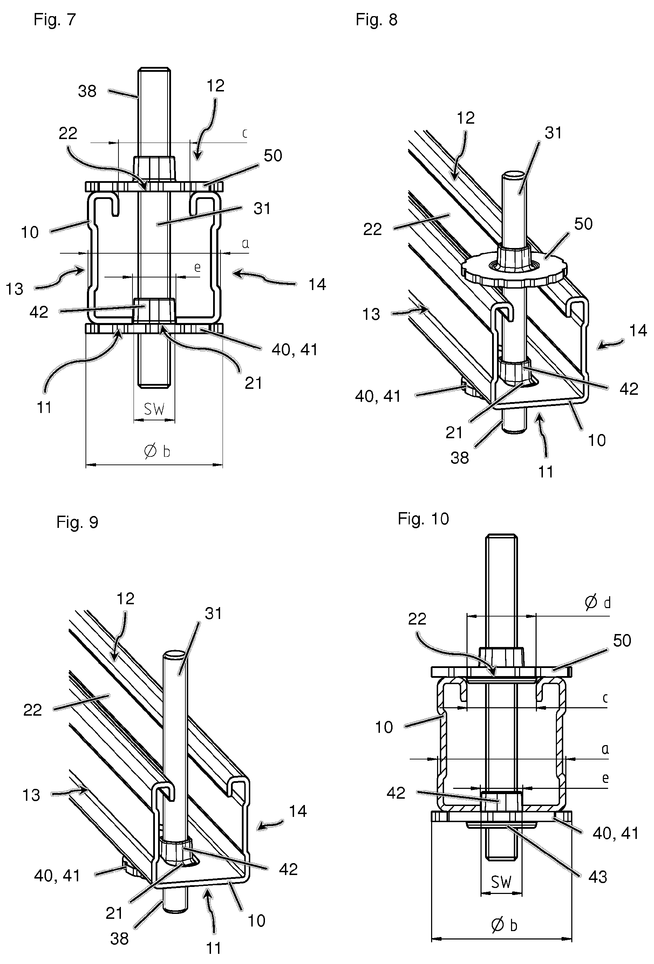

Die Figuren 7 und 8 zeigen ein zweites Ausführungsbeispiel einer erfindungsgemässen Montageanordnung. Das in den Figuren 7 und 8 gezeigte zweite Ausführungsbeispiel entspricht in weiten Teilen dem in den Figuren 5 und 6 gezeigten ersten Ausführungsbeispiel, so dass insoweit, zur Vermeidung von Wiederholungen, auf die Beschreibung des Ausführungsbeispiels der Figuren 5 und 6 verwiesen wird.

Das in den Figuren 7 und 8 gezeigte zweite Ausführungsbeispiel unterscheidet sich von dem in den Figuren 5 und 6 gezeigten ersten Ausführungsbeispiel im Wesentlichen dadurch, dass gemäss dem Ausführungsbeispiel der Figuren 7 und 8 die untere Haltemutter 40 in einer um 180° umgedrehten Anordnung positioniert ist. Insbesondere ist der Mehrkantkragen 42 der Haltemutter 40 des Ausführungsbeispiels der Figuren 7 und 8 der Montageschiene 10 zugewandt und in die erste Durchgangsöffnung 21 der Montageschiene 10 eingeführt. Die Schlüsselweite SW des Mehrkantkragens 42 der unteren Haltemutter 40 ist kleiner als die Breite e der als Langloch ausgebildeten ersten Durchgangsöffnung 21, SW < e, was das Einführen des Mehrkantkragens 42 in die erste Durchgangsöffnung 21 ermöglicht. Da die Schlüsselweite SW des Mehrkantkragens 42 der unteren Haltemutter 40 dabei jedoch nur geringfügig kleiner ist als die Breite e der ersten Durchgangsöffnung 21, hat der Mehrkantkragen 42 in ausgewählten Winkellagen einen Durchmesser, welcher grösser ist als die Breite e der ersten Durchgangsöffnung 21. Dies hat eine formschlüssige Drehkopplung der unteren Haltemutter 40 mit der Montageschiene 10 zur Folge, welche auch bei Vibrationen zuverlässig verhindert, dass sich die untere Haltemutter 40 relativ zur Montageschiene 10 und zur Befestigungseinrichtung 31 dreht, so dass ein unerwünschtes axiales Verstellen zuverlässig vermieden wird.

Bei der Installation der Montageanordnung der Figuren 7 und 8 wird zunächst die untere Haltemutter 40 entlang der als Gewindestange ausgebildeten Befestigungseinrichtung 31 auf die gewünschte Höhe eingestellt. Dann wird der Mehrkantkragen 42 der unteren Haltemutter 40 in die untere Durchgangsöffnung 21 der Montageschiene 10 eingeführt. Schliesslich wird die obere Haltemutter 50 entlang der als Gewindestange ausgebildeten Befestigungseinrichtung 31 an die zweite, obere Längsseite 12 der Montageschiene 10 angepresst und die Montageschiene 10 somit zwischen den beiden Haltemuttern 40 und 50 gesichert.

Figur 9 zeigt ein drittes Ausführungsbeispiel einer erfindungsgemässen Montageanordnung. Das in Figur 9 gezeigte dritte Ausführungsbeispiel entspricht in weiten Teilen dem in den Figuren 7 und 8 gezeigten zweiten Ausführungsbeispiel, so dass insoweit, zur Vermeidung von Wiederholungen, auf die obenstehende Beschreibung verwiesen wird.

Das in Figur 9 gezeigte dritte Ausführungsbeispiel unterscheidet sich von dem in den Figuren 7 und 8 gezeigten zweiten Ausführungsbeispiel im Wesentlichen dadurch, dass gemäss dem Ausführungsbeispiel der Figur 9 die obere Haltemutter 50 des Ausführungsbeispiels der Figuren 7 und 8 nicht vorhanden ist. Somit ist gemäss Figur 9 nur eine einseitige, nämlich untere, axiale Lagerung der Montageschiene 10 an der Befestigungseinrichtung 31 gegeben. Eine obere Haltemutter kann wie im Ausführungsbeispiel der Figur 9 gezeigt beispielsweise in solchen Fällen entfallen, in denen die Schwerkraft für eine axiale Sicherung der Montageschiene 10 nach oben hin ausreichend ist.

Figur 10 zeigt ein viertes Ausführungsbeispiel einer erfindungsgemässen Montageanordnung. Das in Figur 10 gezeigte vierte Ausführungsbeispiel entspricht in weiten Teilen dem in den Figuren 7 und 8 gezeigten zweiten Ausführungsbeispiel, so dass insoweit, zur Vermeidung von Wiederholungen, auf die obenstehende Beschreibung verwiesen wird.

Das in Figur 10 gezeigte vierte Ausführungsbeispiel unterscheidet sich von dem in den Figu-ren 7 und 8 gezeigten zweiten Ausführungsbeispiel im Wesentlichen dadurch, dass die erste Haltemutter 40 gemäss Figur 10 auf ihrer dem Mehrkantkragen 42 abgewandten Seite einen kreisscheibenförmigen Rundkragen 43 aufweist, der auf der dem Mehrkantkragen 42 abgewandten Seite der Basisplatte 41 von der Basisplatte 41 vorsteht, und der insbesondere konzentrisch zum Mehrkantkragen 42 ausgebildet ist. Die obere Haltemutter 50 weist ebenfalls einen solchen Rundkragen auf. Wie Figur 10 zeigt, ist der Durchmesser d des Rundkragens der oberen Haltemutter 50 etwas kleiner als die Breite c der oberen, zweiten Durchgangsöffnung 22, so dass der Rundkragen der oberen Haltemutter 50 zur Zentrierung der oberen Haltemutter 50 in der oberen Durchgangsöffnung 22 dienen kann.

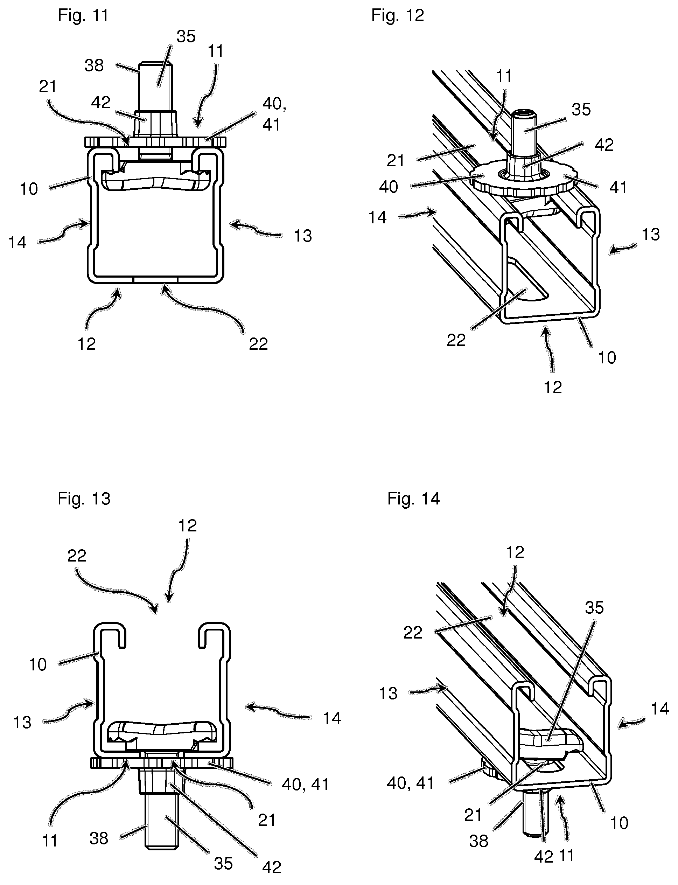

Die Figuren 11 und 12 zeigen ein fünftes Ausführungsbeispiel und die Figuren 13 und 14 ein sechstes Ausführungsbeispiel einer erfindungsgemässen Montageanordnung. Bei den Ausführungsbeispielen der Figuren 11 bis 14 ist die Befestigungseinrichtung 35 jeweils eine Hammerkopfschraube, wobei der Kopf der Hammerkopfschraube beim Ausführungsbeispiel der Figuren 11 und 12 an einer schlitzförmigen Durchgangsöffnung 21 und beim Ausführungsbeispiel der Figuren 13 und 14 an einer langlochförmigen Durchgangsöffnung 21 der Montageschiene 10 axial fixiert ist. Der Mehrkantkragen 42 der Haltemutter 40 zeigt in beiden Fällen nach aussen, von der Montageschiene 10 hinweg.

Figur 14 zeigt eine sogenannte Trapezanordnung, bei welcher eine Montageschiene von zwei zueinander parallelen Gewindestangen an einer Decke abgehängt ist, und bei welcher an der Montageschiene eine oder mehrere Schellen für Rohre oder Leitungen angeordnet sind. Die erfindungsgemässen Montageanordnungen können Teile einer solchen Trapezanordnung sein und dabei eine oder beide Gewindestangen an der Montageschiene fixieren.

**Patentansprüche**

1. Montageanordnung mit

   - einer Montageschiene (10), welche eine erste Längsseite (11), eine der ersten Längsseite (11) gegenüberliegende zweite Längsseite (12), eine die erste Längsseite (11) und die zweite Längsseite (12) verbindende dritte Längsseite (13) und eine die erste Längsseite (11) und die zweite Längsseite (12) verbindende sowie der dritten Längsseite (13) gegenüberliegende vierte Längsseite (14) aufweist, wobei die Montageschiene (10) in ihrer ersten Längsseite (11) eine erste Durchgangsöffnung (21) aufweist,
   - einer Befestigungseinrichtung (31, 35), welche die erste Durchgangsöffnung (21) der Montageschiene (10) durchläuft, und welche ein Aussengewinde (38) aufweist, und
   - einer Haltemutter (40), welche ein zum Aussengewinde (38) der Befestigungseinrichtung (31, 35) korrespondierendes Innengewinde (48) aufweist, welche auf die Befestigungseinrichtung (31, 35) aufgeschraubt ist, und welche die Montageschiene (10) an der ersten Längsseite (11) formschlüssig an der Befestigungseinrichtung (31, 35) sichert,

   **dadurch gekennzeichnet,**

   - **dass** die Haltemutter (40) breiter ist als die erste Längsseite (11) der Montageschiene (10), und dass die Haltemutter (40) auf entgegengesetzten Seiten über die erste Längsseite (11) der Montageschiene (10) übersteht.

2. Montageanordnung nach Anspruch 1,
   **dadurch gekennzeichnet,**
   **dass** die Haltemutter (40) breiter ist als die Montageschiene (10).

3. Montageanordnung nach einem der Ansprüche 1 oder 2,
   **dadurch gekennzeichnet,**

dass die Haltemutter (40) zumindest einen Mehrkantkragen (42) aufweist, der einen Aussenmehrkant aufweist.

4. Montageanordnung nach Anspruch 3,
   **dadurch gekennzeichnet,**
   dass der Mehrkantkragen (42) in die erste Durchgangsöffnung (21) der Montageschiene (10) hineinragt, und dass die Haltemutter (40) am Mehrkantkragen (42) in der ersten Durchgangsöffnung (21) mit der Montageschiene (10) drehgekoppelt ist.

5. Montageanordnung nach einem der Ansprüche 3 oder 4,
   **dadurch gekennzeichnet,**
   dass der Mehrkantkragen (42) integral an der Haltemutter (40) ausgebildet ist.

6. Montageanordnung nach einem der vorstehenden Ansprüche,
   **dadurch gekennzeichnet,**
   dass die Befestigungseinrichtung (31) eine Gewindestange ist, welche die Montageschiene (10) durchläuft.

7. Montageanordnung nach einem der vorstehenden Ansprüche,
   **dadurch gekennzeichnet,**
   dass die Montageschiene (10) in ihrer zweiten Längsseite (12) eine zweite Durchgangsöffnung (22) aufweist,
   dass die Befestigungseinrichtung (31) die zweite Durchgangsöffnung (22) der Montageschiene (10) durchläuft, und **dass** die Montageanordnung eine zweite Haltemutter (50) aufweist, welche ein zum Aussengewinde (38) der Befestigungseinrichtung (31) korrespondierendes Innengewinde aufweist, welche auf die Befestigungseinrichtung (31) aufgeschraubt ist, und welche die Montageschiene (10) an der zweiten Längsseite (22) formschlüssig an der Befestigungseinrichtung (31) sichert.

8. Montageanordnung nach Anspruch 7,
   **dadurch gekennzeichnet,**
   dass die erste Haltemutter (40) und die zweite Haltemutter (50) im Wesentlichen identische Abmessungen aufweisen.

9. Montageanordnung nach einem der Ansprüche 1 bis 5,
   **dadurch gekennzeichnet,**
   dass die Befestigungseinrichtung (35) eine Hammerkopfschraube ist, welche in der Montageschiene (10) endet.

Fig. 1a

Fig. 1b

Fig. 2

SW

42

40, 41

h

t

Fig. 3

48

42

40, 41

Fig. 4

40, 41

48

Fig. 5

38

12

22

c

50

10

31

13

a

14

42

40, 41

11

21

SW

42

Ø b

Fig. 6

12

31

22

50

13

14

40, 41

21

38

42  11

10

Fig. 7

Fig. 8

Fig. 9

Fig. 10

Fig. 11

Fig. 12

Fig. 13

Fig. 14

Fig. 15

Europäisches
Patentamt

European
Patent Office

Office européen
des brevets

**EUROPÄISCHER RECHERCHENBERICHT**

Nummer der Anmeldung

EP 16 15 0736

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 100 36 478 A1 (SINN EDGAR EMIL [DE]) 7. Februar 2002 (2002-02-07) | 1-8 | INV. F16B7/18 F16B37/04 |
| Y | * Zusammenfassung * * Ansprüche 12,17 * * Abbildungen 5-7 * ----- | 9 | |
| X | FR 2 891 029 A1 (KNAUF SOC PAR ACTIONS SIMPLIFI [FR]) 23. März 2007 (2007-03-23) * Zusammenfassung * * Ansprüche 12,17 * * Abbildungen 5-7 * ----- | 1,2 | |
| Y | DE 298 18 837 U1 (BAUER PROFILTECHNIK GMBH [DE]) 14. Januar 1999 (1999-01-14) * Anspruch 5; Abbildungen 1-3 * ----- | 9 | |

RECHERCHIERTE SACHGEBIETE (IPC)

F16B

Der vorliegende Recherchenbericht wurde für alle Patentansprüche erstellt

| Recherchenort | Abschlußdatum der Recherche | Prüfer |
|---|---|---|
| München | 15. Juni 2016 | Huusom, Carsten |

KATEGORIE DER GENANNTEN DOKUMENTE

X : von besonderer Bedeutung allein betrachtet
Y : von besonderer Bedeutung in Verbindung mit einer
      anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
      nach dem Anmeldedatum veröffentlicht worden ist
D : in der Anmeldung angeführtes Dokument
L : aus anderen Gründen angeführtes Dokument
...............................................................................................
& : Mitglied der gleichen Patentfamilie, übereinstimmendes
      Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 15 0736

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-06-2016

| Im Recherchenbericht angeführtes Patentdokument | Datum der Veröffentlichung | Mitglied(er) der Patentfamilie | Datum der Veröffentlichung |
|---|---|---|---|
| DE 10036478 A1 | 07-02-2002 | KEINE | |
| FR 2891029 A1 | 23-03-2007 | KEINE | |
| DE 29818837 U1 | 14-01-1999 | KEINE | |

EPO FORM P0461

Für nähere Einzelheiten zu diesem Anhang : siehe Amtsblatt des Europäischen Patentamts, Nr.12/82

EP 3 190 299 A1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2880949 A

- US 3960350 A